# EUROPEAN PATENT SPECIFICATION

(11) **EP 3 838 626 B1**
(45) Date of publication and mention of the grant of the patent: **26.04.2023**
(21) Application number: 20211856.8
(22) Date of filing: 04.12.2020
(51) Int. Cl.: B60C 11/03, B60C 11/12

(54) **TIRE**
REIFEN
PNEUMATIQUE

(30) Priority: 16.12.2019 JP 2019226421; 16.12.2019 JP 2019226422
(43) Date of publication of application: 23.06.2021
(73) Proprietor: Sumitomo Rubber Industries, Ltd., Kobe-shi, Hyogo-ken 651-0072 (JP)
(72) Inventor: LI, Qingmao, Kobe-shi,, Hyogo 651-0072 (JP); MIHARA, Naoya, Kobe-shi,, Hyogo 651-0072 (JP)
(74) Representative: Manitz Finsterwald Patent- und Rechtsanwaltspartnerschaft mbB

(56) References cited:
- EP-A1- 3 042 790
- EP-A1- 3 213 932
- EP-A1- 3 505 369
- EP-B1- 3 042 790
- EP-B1- 3 505 369
- US-A1- 2018 134 093

## Description

### Technical field

The present invention relates to a tire.

### Background art

JP 2012-101572 A discloses a pneumatic tire wherein the tread portion is provided with a shoulder main groove which extends zigzag in the tire circumferential direction and defines a shoulder land region on the axially outside thereof. The shoulder land region is circumferentially divided into shoulder blocks by shoulder lateral grooves.

EP 3 505 369 A1 discloses a tire according to the preamble of claim 1. Further tires having shoulder blocks with a convex portion are disclosed in EP 3 213 932 A1, EP 3 042 790 A1, and US 2018/0134093 A1.

### summary of the invention

### Problems to be solved by the invention

The tire described above provide great driving force and braking force on wet road surfaces, and exerts excellent wet performance.

on the other hand, during cornering, the shoulder blocks are subjected to large lateral forces. The shoulder blocks are liable to slip against road surfaces due to a tire diameter difference, that is, the tire diameter measured at the shoulder blocks is less than the tire diameter measured at blocks disposed around the tire equator, therefore, the shoulder blocks are liable wear more than other blocks. As a result, there is a problem that uneven wear such as so-called shoulder wear and railway wear is likely to occur.

The present invention was made in view of the situation as described above, and a primary objective of the present invention is to provide a tire in which uneven wear resistance is improved without sacrificing wet performance.

According to the present invention, a tire comprises
a tread portion provided with shoulder blocks defined by a tread edge, a shoulder circumferential groove located adjacent to the tread edge and extending continuously in the tire circumferential direction in a zigzag manner, and shoulder lateral grooves extending from the shoulder circumferential groove to the tread edge,
   wherein
each of the shoulder blocks comprises a convex portion which projects toward the axially inside of the tire and is formed by one of corners of zigzag of the shoulder circumferential groove, and
each of the shoulder blocks is provided with a longitudinal groove extending in the tire circumferential direction so that at least one of ends of the longitudinal groove is located within the shoulder block, and
the longitudinal groove has a groove depth less than groove depths of the shoulder circumferential groove and the shoulder lateral grooves, the groove depth of the longitudinal groove being in the range from 5% to 20% of the groove depth of the shoulder circumferential groove.

It is preferable that both of the above-said ends of the longitudinal groove are located within the shoulder block.

It is preferable that each of the longitudinal grooves is v-shaped.

It is preferable that the groove width of the above-said longitudinal groove decreases continuously from its center in the tire circumferential direction to each of the ends.

It is preferable that an angle of a straight line drawn between the two ends of the longitudinal groove is not more than 10 degrees with respect to the tire circumferential direction.

It is preferable that the longitudinal groove is disposed axially inside the center in the tire axial direction of the shoulder block.

It is preferable that the minimum distance from the axially inner edge of the shoulder block to the longitudinal groove is not less than 3 mm.

It is preferable that the opening area of the longitudinal groove at the ground contacting top surface of the shoulder block is not more than 10% of the overall area of the ground contacting top surface of the shoulder block.

It is preferable that the minimum distance between the longitudinal groove and the tread edge measured in the tire axial direction is not more than 75% of the tire axial width of the shoulder block.

It is preferable that the length in the tire circumferential direction of the longitudinal groove is not less than 55% of the length in the tire circumferential direction of the shoulder block.

It is preferable that the tread portion is provided with a plurality of circumferential grooves each extending continuously in the tire circumferential direction in a zigzag manner, inclusive of the above-said shoulder circumferential groove, and a plurality of land regions are defined between the circumferential grooves,
each of the land regions is provided with lateral grooves and thereby circumferentially divided into hexagonal-shaped blocks arranged in the tire circumferential direction,
each of the hexagonal-shaped blocks has a width in the tire axial direction, and a length in the tire circumferential direction greater than the width in the tire axial direction,
each of the hexagonal-shaped blocks is provided with a sipe traversing the block in the tire axial direction and thereby circumferentially subdivided into two regions,
at least one of the subdivided two regions of at least one of the hexagonal-shaped blocks is provided with a shallow groove, and
the shallow groove has a groove depth less than the groove depths of the circumferential grooves and the lateral grooves.

It is preferable that the shallow groove comprises a first groove segment extending along the lateral grooves.

It is preferable that the shallow groove comprises a second groove segment extending from each of ends of the first groove segment in a direction along the circumferential groove.

It is preferable that the shallow groove has a groove depth of not more than 0.2 times the groove depth of said circumferential grooves.

In this application, the term "sipe" means a narrow groove having a width less than 1.5 mm inclusive of a cut having no substantial width. The term "groove" (including circumferential grooves and lateral grooves) means a groove having a width of 1.5 mm or more.

In this application, the expression "extending along" means that widthwise center lines of the grooves concerned are parallel with each other, as well as that the angle formed between the widthwise center lines is less than 15 degrees.

### Brief description of the drawings

Fig. 1 is a developed partial view of the tread portion of a tire as an embodiment of the present invention.
Fig. 2 shows a top view of a shoulder block.
Fig. 3(a) is a cross-sectional view of a part of the shoulder block taken along line c-c of Fig. 2.
Fig. 3(b) is a cross-sectional view of a part of the shoulder block taken along line d-d of Fig. 2.
Fig. 4 is a diagram showing the profile of the tread portion.
Fig. 5 is the same developed partial view as Fig. 1 which is differently provided with reference signs.
Fig. 6 is the same developed partial view as Fig. 1 which is differently provided with reference signs.
Fig. 7 is a top view of a hexagonal-shaped block.
Fig. 8A is a cross-sectional view of the hexagonal-shaped block taken along line a-a of Fig. 7.
Fig. 8B is a cross-sectional view of a part of the hexagonal-shaped block taken along line b-b of Fig. 7.
Fig. 9 is a developed partial view of the tread portion of a tire as another embodiment of the present invention.
Fig. 10 is a developed partial view of the tread portion of a tire as yet another embodiment of the present invention.
Fig. 11 is a developed partial view of the tread portion of a tire as yet another embodiment of the present invention.
Fig. 12 is a developed partial view of the tread portion of a tire as yet another embodiment of the present invention.
Fig. 13 is a developed partial view of the tread portion of a tire as yet another embodiment of the present invention.

### Description of the Preferred Embodiments

The present invention can be applied to a variety of tires including pneumatic tires and non-pneumatic tires so called airless tire for various vehicles, e.g. heavy-duty vehicles such as trucks and buses, passenger cars, industrial vehicles, and the like, but suitably applied to heavy-duty pneumatic tires in particular.

Now, taking a pneumatic tire for heavy-duty vehicles as an example, embodiments of the present invention will be described in detail in conjunction with accompanying drawings.

As well known in the art, a pneumatic tire comprises a tread portion 2 whose radially outer surface defines the tread, a pair of axially spaced bead portions mounted on rim seats, a pair of sidewall portions extending between the tread edges and the bead portions, a carcass extending between the bead portions through the tread portion and the sidewall portions, and a tread reinforcing cord layer disposed radially outside the carcass in the tread portion.

In the case of a pneumatic tire, various dimensions, positions and the like of the tire refer to those under a normally inflated unloaded condition of the tire unless otherwise noted. The normally inflated unloaded condition is such that the tire is mounted on a standard wheel rim and inflate to a standard pressure but loaded with no tire load.

The tread edges Te are the axial outermost edges of the ground contacting patch of the tire which occurs under the normally loaded condition when the camber angle of the tire is zero.

In the case of a pneumatic tire, the normally loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.

The standard pressure and the standard tire load are the maximum air pressure and the maximum tire load for the tire specified by the same organization in the Air-pressure/Maximum-load Table or similar list.

For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various Cold Inflation Pressures" table in TRA or the like. The standard load is the "maximum load capacity" in JATMA, the "Load capacity" in ETRTO, the maximum value given in the above-mentioned table in TRA or the like.

The tread width TW is the width measured under the normally inflated unloaded condition as the axial distance between the tread edges Te determined as above.

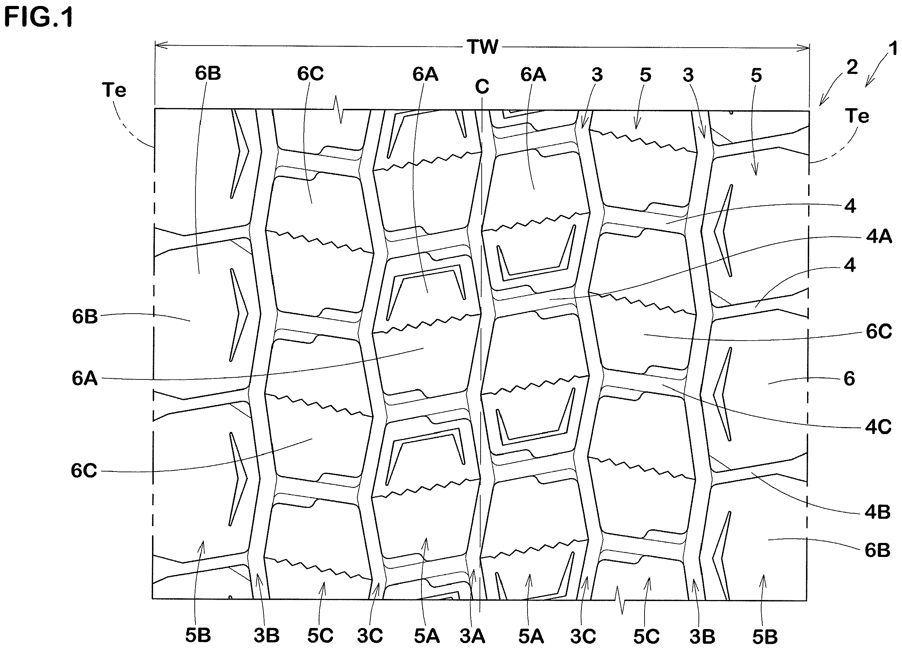

Fig. 1 shows the tread portion 2 of a heavy duty pneumatic tire 1, as an embodiment of the present invention.

As shown, the tread portion 2 in the present embodiment is provided with a plurality of circumferential grooves 3 extending zigzag in the tire circumferential direction, thereby axially divided into a plurality of land regions 5.

The zigzag circumferential grooves 3 increase driving forces and braking forces on wet road surfaces and enhance wet performance.

The circumferential grooves 3 in the present embodiment include one crown circumferential groove 3A disposed on the tire equator C, two shoulder circumferential grooves 3B disposed adjacent to the respective tread edges Te, and two middle circumferential grooves 3c each disposed between the crown circumferential groove 3A and one of the two shoulder circumferential grooves 3B.

In the present embodiment, each of the land regions 5 is provided with a plurality of lateral grooves 4 so that the land region is circumferentially divided into a plurality of blocks 6 arranged in the tire circumferential direction. such lateral grooves 4 enhance wet performance.

The lateral grooves 4 in the present embodiment include crown lateral grooves 4A, shoulder lateral grooves 4B and middle lateral grooves 4C.

In the present embodiment, the crown lateral grooves 4A are arranged at intervals in the tire circumferential direction, and independent from each other. The shoulder lateral grooves 4B are arranged at intervals in the tire circumferential direction, and independent from each other. The middle lateral grooves 4C are arranged at intervals in the tire circumferential direction, and independent from each other.

The land regions 5 in the present embodiment include two crown land regions 5A, two shoulder land regions 5B, and two middle land regions 5c.

The shoulder land regions 5B are the axially outermost land regions defined between the respective tread edges Te and the shoulder circumferential grooves 3B.

The crown land regions 5A are located closest to the tire equator c and defined between the crown circumferential groove 3A and the respective middle circumferential grooves 3c.

The middle land regions 5c are land regions between the crown land regions 5A and the shoulder land regions 5B, and each defined between one of the middle circumferential grooves 3c and an adjacent one of the shoulder circumferential groove 3B.

εach of the crown land regions 5A, shoulder land regions 5B and middle land regions 5c has wide and narrow portions alternately arranged in the tire circumferential direction.

εach of the crown land regions 5A in the present embodiment comprises a plurality of crown blocks 6A divided by the crown circumferential groove 3A, one of the middle circumferential grooves 3c and the crown lateral grooves 4A.

εach of the shoulder land regions 5B in the present embodiment comprises a plurality of shoulder blocks 6B divided by one of the shoulder circumferential grooves 3B, the adjacent tread edge Te and the shoulder lateral grooves 4B.

εach of the middle land regions 5c in the present embodiment comprises a plurality of middle blocks 6c divided by one of the middle circumferential grooves 3c, the adjacent shoulder circumferential groove 3B and the middle lateral grooves 4C.

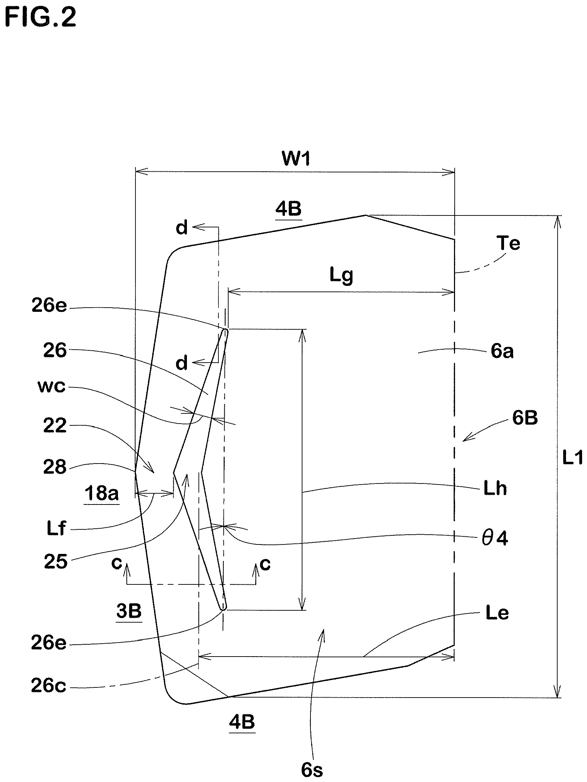

As shown in Fig. 2, the shoulder block 6B has a convex portion 22 projecting toward the axially inside and formed by one of corners of zigzag of the shoulder circumferential groove 3B. such convex portion 22 increases the lateral rigidity of the shoulder block 6B and suppresses the occurrence of uneven wear such as so-called shoulder wear and railway wear.

The shoulder blocks 6B are each provided with a longitudinal groove 26 extending in the tire circumferential direction in order to enhance wet performance.

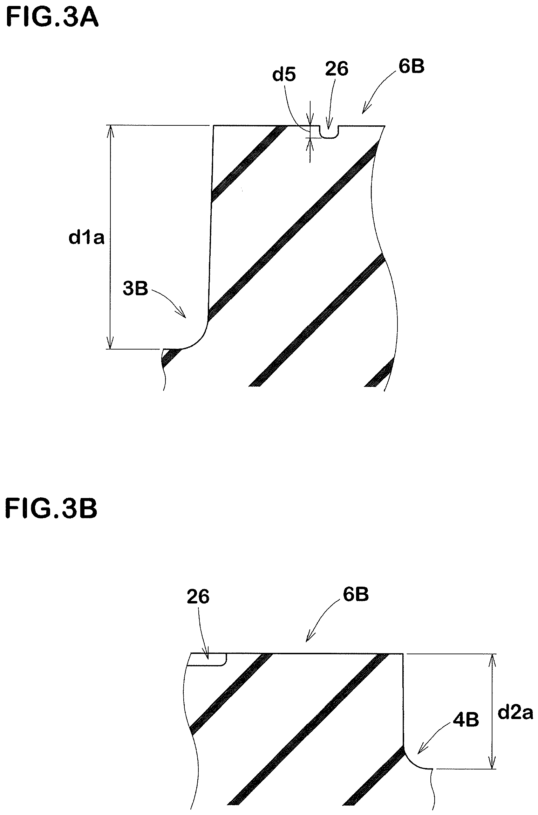

Fig. 3(a) is a cross-sectional view of a part of the shoulder block taken along line c-c of Fig. 2.

Fig. 3(b) is a cross-sectional view of a part of the shoulder block taken along line d-d of Fig. 2.

As shown, the groove depth d5 of the longitudinal groove 26 is less than the groove depth of the shoulder circumferential groove 3B and the groove depth of the shoulder lateral groove 4B.

As shown in Fig. 2, at least one of ends 26e of the longitudinal groove 26 is located within the shoulder block 6B. Such longitudinal groove 26 reduces the rigidity of the shoulder block 6B to a moderate degree to allow the shoulder block 6B to deform slightly when contacting with the ground. This increases the contact between the shoulder block 6B and the road surface and suppresses slippage. Thus the uneven wear resistance is improved.

The groove depth d5 of the longitudinal groove 26 is in a range from 5 % to 20 % of the groove depth d1a of the shoulder circumferential groove 3B.

Since the groove depth d5 of the longitudinal groove 26 is 5% or more of the groove depth d1a of the shoulder circumferential groove 3B, the rigidity of the shoulder block 6B is moderately reduced, which allow the shoulder block 6B to deform slightly at the time of contacting with the ground.

since the groove depth d5 of the longitudinal groove 26 is 20% or less of the groove depth d1a of the shoulder circumferential groove 3B, the lateral rigidity of the shoulder block 6B is maintained high.

It is preferable that the groove depth d5 of the longitudinal groove 26 is set in a range from 5% to 15% of the groove depth d2a of the shoulder lateral groove 4B.

As shown in Fig. 2, both ends 26E and 26E of the longitudinal groove 26 are located within the shoulder block 6B. This prevents an excessive decrease in the stiffness of the shoulder block 6B, and can reduce the occurrence of uneven wear.

In the present embodiment, the longitudinal groove 26 has an apex 25 protruding inwardly in the tire axial direction. The longitudinal groove 26 in this example is v-shaped.

The edges of such longitudinal groove 26 have an axial edge component which increases driving force and braking force on wet road surfaces. In the present embodiment, the apex 25 is located in the center in the tire circumferential direction of the longitudinal groove 26.

The longitudinal grooves 26 is oriented such that the angle θ4 of a straight line drawn between its ends 26e and 26e is less than 10 degrees with respect to the tire circumferential direction. Thereby, the load in the tire circumferential direction acting on the longitudinal groove 26 during running is divided almost equally to both sides in the tire axial direction of the longitudinal groove 26. Thus, the wet performance is further enhanced.

The groove width wc of the longitudinal groove 26 decreases continuously from its center in the tire circumferential direction to each end 26e thereof.

such longitudinal groove 26 suppress excessive decrease in the stiffness of the shoulder block 6B.

It is preferable that the groove width wc of the longitudinal groove 26 is about 5% to 15% of the maximum width w1 in the tire axial direction of the shoulder block 6B although not particularly limited thereto,

The longitudinal groove 26 is disposed axially inside the center position 6s in the tire axial direction of the axial width w1 of the shoulder block 6B. In the shoulder block 6B, the region axially inside the center position 6s is subject to a relatively small lateral force compared to the region on the tread edge Te side of the center position 6s. Therefore, even if the longitudinal groove 26 is provided in the region axially inside the center position 6s, excessive decrease in the stiffness is prevented.

On the other hand, the region on the tread edge Te side of the center position 6s maintains a higher lateral stiffness. Thereby, the uneven wear resistance is improved. In each shoulder block 6B in the present embodiment, the region on the tread edge Te side of the center position 6s is provided with neither a sipe nor a groove, so the above functions are effectively exerted.

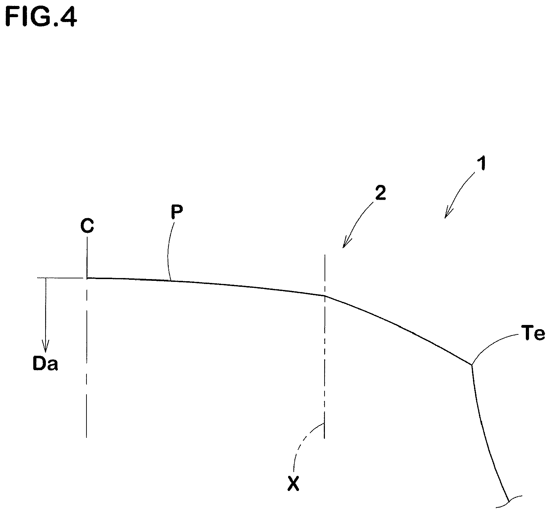

Fig. 4 is a diagram showing the profile P of the tread portion 2. As shown, in a heavy duty pneumatic tire 1 in the present embodiment, the outer diameter Da of the tire 1 decreases from the tire equator C toward the tread edges Te, and makes a larger change from a certain axial position x. such a larger change in the outer diameter Da is especially-pronounced in a low aspect ratio tire. Here, the low aspect ratio means 60% or less.

For this reason, as shown in Fig. 2, the longitudinal grooves 26 is preferably disposed at a distance Le of from 5% to 15% of the tread width TW from the tread edge Te toward the axially inside. The distance Le is measured in the tire axial direction between the center position 26c in the tire axial direction of the longitudinal groove 26 and the tread edge Te. Thereby, at the axial position x, the ground contact is effectively enhanced by the deformation of the block 6, and the slippage of the shoulder block 6B is further suppressed.

It is preferable that the minimum distance Lf between the longitudinal groove 26 and the axially inner edge 28 of the shoulder block 6B is not less than 3 mm.

Incidentally, the axially inner edge 28 is positioned on the ground contacting top surface 6a of the shoulder block 6B. Thereby, a portion of the shoulder block 6B between the longitudinal groove 26 and the axially inner edge 28 can ensures rigidity to prevent wear and uneven wear from occurring in this portion. If the minimum distance Lf is increased, deformation may not be induced when contacting with the ground.

From this perspective, the minimum distance Lf is preferably not more than 13 mm, more preferably not more than 8 mm.

It is preferable that the minimum distance Lg in the tire axial direction between the longitudinal groove 26 and the tread edge Te is not less than 75% of the axial width W1 of the shoulder block 6B. Thereby, the rigidity of the shoulder block 6B is decreased to a reasonably small degree, and induce the deformation when contacting with the ground.

If the minimum distance Lg is excessively small, the lateral stiffness of a portion on the tread edge Te side of the shoulder block 6B is reduced, and the uneven wear resistance is deteriorated. In this regard, the minimum distance Lg is preferably not less than 70% of the tire axial width W1 of the shoulder block 6B.

It is preferable that the length Lh in the tire circumferential axial direction of the longitudinal groove 26 is not less than 55% of the length L1 in the tire circumferential direction of the shoulder block 6B. This can effectively induce the deformation of the shoulder block 6B, and further, it is also possible to improve wet performance.

If the length Lh of the longitudinal groove 26 is excessively large, the lateral rigidity of the shoulder block 6B is greatly reduced, and thus uneven wear is likely to occur. For this reason, the length Lh of the longitudinal groove 26 is preferably not more than 80% of the length L1 in the tire circumferential direction of the shoulder block 6B.

It is preferable that the opening area sb of the longitudinal groove 26 at the ground contacting top surface 6a of the shoulder block 6B is less than 10% of the overall area sa of the ground contacting top surface 6a. This increases the lateral rigidity of the shoulder block 6B and suppresses uneven wear.

If the opening area sb of the longitudinal groove 26 is excessively small, it may be difficult to induce the deformation of the shoulder block 6B when contacting with the ground.

For this reason, the opening area sb of the longitudinal groove 26 is preferably not less than 2% of the overall area sa of the ground contacting top surface 6a of the shoulder block 6B.

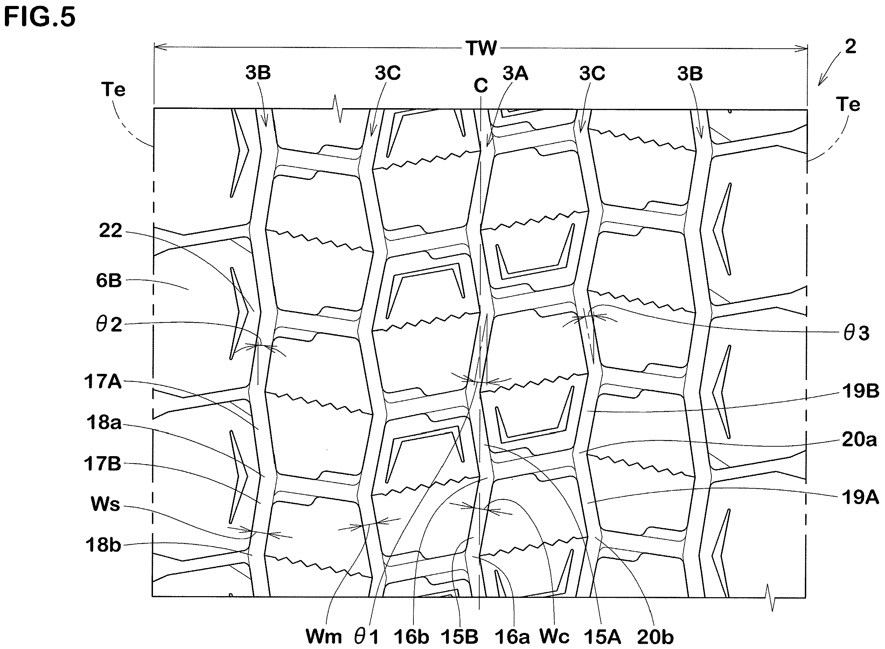

The crown circumferential groove 3A in the present embodiment is made up of crown-groove first inclined segments 15A and crown-groove second inclined segments 15B which are arranged alternately in the tire circumferential direction as shown in Fig. 5.

The crown-groove first inclined segments 15A are inclined with respect to the tire circumferential direction to one side (lower right in Fig. 5).

The crown-groove second inclined segments 15B are inclined with respect to the tire circumferential direction to the other side (lower left in Fig. 5).

The crown circumferential groove 3A has
crown-groove first protruding parts 16a protruding toward the tread edge Te on one side in the tire axial direction (left side in the figure), and
crown-groove second protruding parts 16b protruding toward the tread edge Te on the other side in the tire axial direction (right side in the figure).

The crown-groove first protruding parts 16a and the crown-groove second protruding parts 16b are formed at the junctions between the crown-groove first inclined segments 15A and the crown-groove second inclined segments 15B.

In the present embodiment, the crown-groove first protruding parts 16a and the crown-groove second protruding parts 16b are alternately arranged in the tire circumferential direction.

It is preferable that the crown-groove first inclined segments 15A and the crown-groove second inclined segments 15B are inclined at an angle θ1 of from 5 to 20 degrees with respect to the tire circumferential direction.

The edges of such crown circumferential groove 3A have an edge component in the tire axial direction. This increases braking force and driving force on wet roads and expedites drainage of water in the groove.

εach of the shoulder circumferential grooves 3B in the present embodiment is made up of first inclined segments 17A and second inclined segments 17B which are arranged alternately in the tire circumferential direction as shown in Fig. 5.

The first inclined segments 17A are inclined with respect to the tire circumferential direction to one side (lower right in Fig. 5). The second inclined segments 17B are inclined with respect to the tire circumferential direction to the other side (lower left in Fig. 5).

εach of the shoulder circumferential grooves 3B has
shoulder-groove first protruding parts 18a protruding toward the tire equator C, and
shoulder-groove second protruding parts 18b protruding toward the adjacent tread edge Te.

The shoulder-groove first protruding parts 18a and the shoulder-groove second protruding parts 18b are formed at the junctions between the first inclined segments 17A and the second inclined segments 17B.

The shoulder-groove first protruding parts 18a and the shoulder-groove second protruding parts 18b are alternately arranged in the tire circumferential direction.

The shoulder-groove first protruding parts 18a respectively form the convex portions 22 of the shoulder blocks 6B.

It is preferable that the first inclined segments 17A and the second inclined segments 17B are inclined at an angle θ2 of from 5 to 20 degrees with respect to the tire circumferential direction. such shoulder circumferential grooves 3B also increase braking force and driving force on wet roads and expedites drainage of water in the groove.

εach of the middle circumferential grooves 3C in the present embodiment is made up of middle-groove first inclined segments 19A and middle-groove second inclined segments 19B which are arranged alternately in the tire circumferential direction as shown in Fig. 5.

The middle-groove first inclined segments 19A are inclined with respect to the tire circumferential direction toward one side (lower right in Fig. 5). The middle-groove second inclined segments 19B are inclined with respect to the tire circumferential direction toward the other side (lower left in Fig. 5).

εach of the middle circumferential grooves 3C has
middle-groove first protruding parts 20a protruding toward the tire equator C, and
middle-groove second protruding parts 20b protruding toward the adjacent tread edge Te.

The middle-groove first protruding parts 20a and the middle-groove second protruding parts 20b are formed at the junctions between the middle-groove first inclined segments 19A and the middle-groove second inclined segments 19B.

The middle-groove first protruding parts 20a and the middle-groove second protruding parts 20b are alternately arranged in the tire circumferential direction.

It is preferable that the middle-groove first inclined segments 19A and the middle-groove second inclined segments 19B have an angle θ3 with respect to the tire circumferential direction which is greater than the angle θ2 of the first inclined segments 17A and the second inclined segments 17B of the shoulder circumferential grooves 3B with respect to the tire circumferential direction. Preferably, the angle θ3 is in a range from 7 to 25 degrees. such middle circumferential grooves 3C also increase braking force and driving force on wet roads and expedites drainage of water in the groove.

In the present embodiment, the crown circumferential groove 3A, the shoulder circumferential grooves 3B, and the middle circumferential grooves 3C all have the substantial same zigzag pitch or zigzag cycle, and these circumferential grooves 3A, 3B and C are arranged by shifting their zigzag phases such that each of the middle circumferential grooves 3C is shifted in the tire circumferential direction from the adjacent crown circumferential groove 3A by substantially one-half of a zigzag pitch, and also shifted from the adjacent shoulder circumferential groove 3B by substantially one-half of a zigzag pitch. Here, the expression "substantial" is used in consideration of the fact that a so-called variable pitch method may be adopted for the arrangement of lateral grooves, blocks and the like.

It is preferable that the groove width Ws of the shoulder circumferential grooves 3B is greater than the groove width wc of the crown circumferential groove 3A, and also greater than the groove width Wm of the middle circumferential grooves 3C. Thereby, in the vicinity of the tire equator C where the ground contact pressure is relatively high, the tread portion 2 maintains relatively high circumferential stiffness, and wear resistance is improved.

If the groove width ws of the shoulder circumferential groove 3B is excessively larger than the groove width Wc of the crown circumferential groove 3A and the groove width Wm of the middle circumferential groove 3C, then the lateral rigidity of the shoulder land regions 5B is reduced, and slippage is likely to occur, which may worsen the uneven wear resistance.

For this reason, the groove width Ws is preferably not less than 1.05 times, more preferably not less than 1.10 times, but preferably not more than 1.5 times the groove width Wc. And the groove width ws is preferably not less than 1.05 times, more preferably not less than 1.10 times, but preferably not more than 1.5 times the groove width Wm.

In the present embodiment, the groove width Wc and the groove width wm are greater than 3 mm.

In the present embodiment, the groove width Wc is in a range from 0.9 to 1.1 times the groove width Wm.

Preferably, the groove width wm is in a range from 1.5% to 4.0% of the tread width TW.

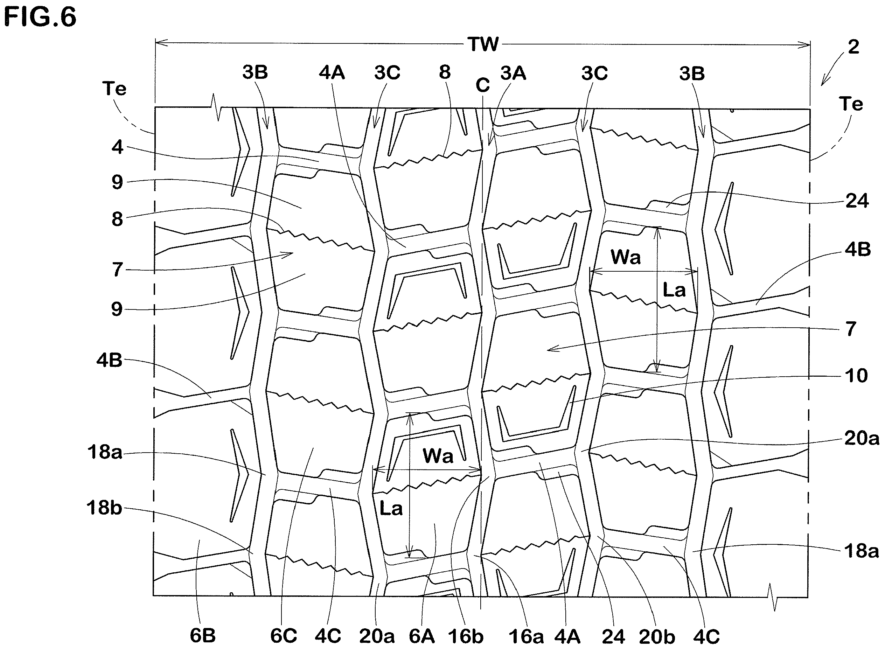

As shown in Fig. 6, the crown lateral grooves 4A connect between the crown circumferential groove 3A and the middle circumferential grooves 3C. In the present embodiment, the crown lateral grooves 4A extend from the crown-groove first protruding parts 16a and the crown-groove second protruding parts 16b to the middle-groove first protruding parts 20a.

More specifically, the crown lateral groove 4A on one side of the crown circumferential groove 3A (left side in the figure) extend from the respective crown-groove first protruding parts 16a to the respective middle-groove first protruding parts 20A. And the crown lateral groove 4A on the other side of the crown circumferential groove 3A (right side in the figure) extend from the respective crown-groove second protruding parts 16b to the respective middle-groove first protruding parts 20a.

The shoulder lateral grooves 4B extend from the shoulder circumferential grooves 3B to the tread edged Te. In the present embodiment, the shoulder lateral grooves 4B extend from the shoulder-groove second protruding parts 18b to the adjacent tread edges Te.

The middle lateral grooves 4C extend from the shoulder circumferential grooves 3B to the middle circumferential grooves 3C. In the present embodiment, the middle lateral grooves 4C extend from the respective middle-groove second protruding parts 20b to the respective shoulder-groove first protruding parts 18a.

In the present embodiment, the plurality of blocks 6 includes a plurality of hexagonal-shaped blocks 7.

Each of the hexagonal-shaped blocks 7 has a width Wa in the tire axial direction, and a length La in the tire circumferential direction greater than the width Wa in the tire axial direction. such hexagonal-shaped block 7 has high circumferential rigidity, which reduces the amount of movement and deformation of the block when contacting with the ground, and thereby has excellent wear resistance.

In order to effectively derive the above-mentioned function, the length La in the tire circumferential direction is preferably in a range from1.2 to 1.8 times the width Wa in the tire axial direction.

If the length La exceeds 1.8 times the width wa, the balance between the circumferential stiffness and the axial stiffness or lateral stiffness of the hexagonal-shaped block 7 may be deteriorated, and wear due to lateral forces during cornering may be caused.

In order to effectively control wear and uneven wear, It is preferred that the length La of the hexagonal-shaped block 7 is set in a range from 15% to 30% of the tread width TW.

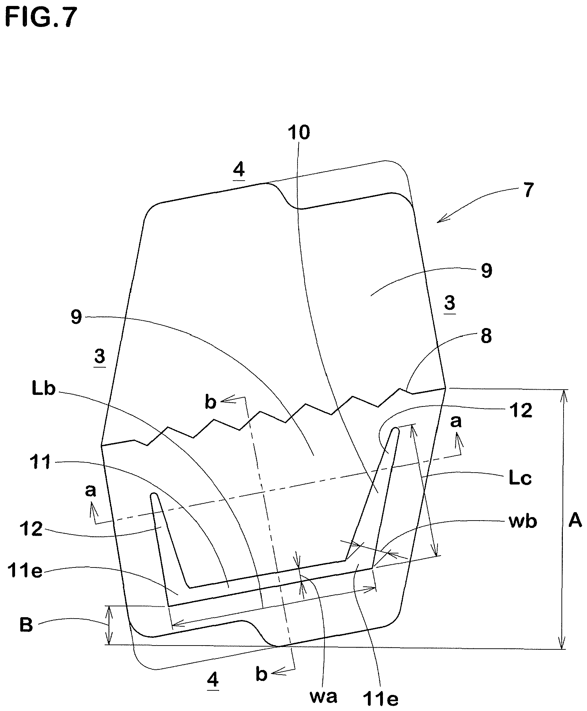

In the present embodiment, as shown in Fig. 7, the ground contacting top surface of the hexagonal-shaped block 7 is provided with a sipe 8 extending in the tire axial direction, and thereby the ground contacting top surface is subdivided into two regions 9.
when the hexagonal-shaped block 7 contacts with the ground, as the sipe 8 allows moderate deformation of the hexagonal-shaped block 7 without significantly decreasing the block rigidity, stress may be relaxed. This helps to maintain the excellent wear resistance of the hexagonal-shaped block 7 or improve the wear resistance.

The width measured in the tire axial direction, of each hexagonal-shaped block 7 is increased toward its center in the tire circumferential direction from both sides or edges in the tire circumferential direction. such hexagonal-shaped block 7 has a high circumferential rigidity. Thus the hexagonal-shaped block 7 in the present embodiment has a mid-bulge shape which is reverse tapered from both sides in the tire circumferential direction toward the center in the tire circumferential direction. such hexagonal-shaped block 7 has high circumferential stiffness and high lateral stiffness.

At least one of the regions 9 of at least one of the hexagonal-shaped blocks 7 is provided with a shallow groove 10.

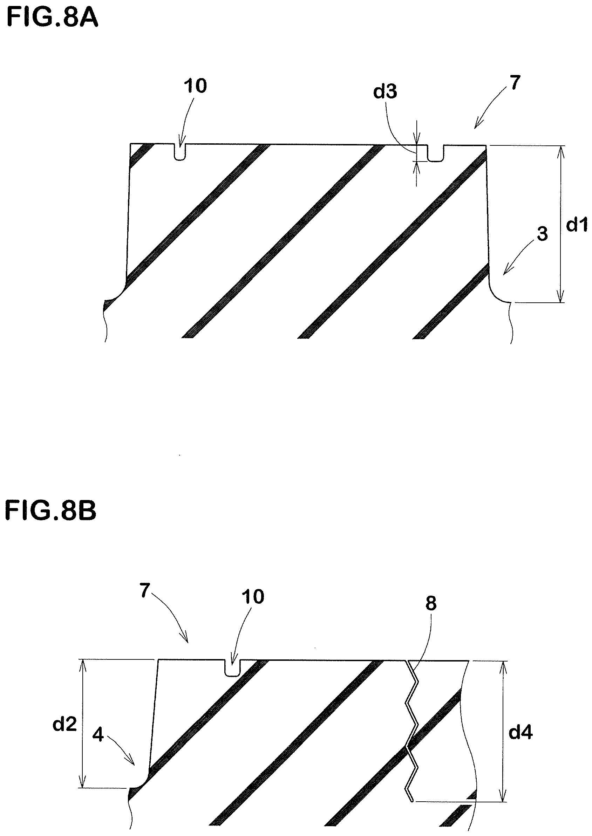

Fig. 8A is a cross-sectional view of the hexagonal-shaped block taken along line a-a of Fig. 7.

Fig. 8B is a cross-sectional view of a part of the hexagonal-shaped block taken along line b-b of Fig. 7.

As shown, the groove depth d3 of the shallow groove 10 is less than the groove depth d1 of the circumferential groove 3 and less than the groove depth d2 of the lateral groove 4.

such shallow groove 10 can mitigate the rigidity of the region 9 locally, and consequently reduce impact noise generated when the block edges come into contact with the road surface. Therefore, the tire 1 in the present embodiment can improve the noise performance without deteriorating the excellent wear resistance of the hexagonal-shaped block 7.

It is preferable that the groove depth d1 of the circumferential groove 3 is in a range from 13 to 19.5 mm although not particularly limited thereto.

It is preferable that the groove depth d2 of the lateral grooves 4 is set in a range from 6 to 17 mm.

It is preferable that the groove depth d3 of the shallow groove 10 is not more than 0.2 times the groove depth d1 of the circumferential grooves 3.

such shallow groove 10 suppress a significant decrease in the circumferential rigidity of the region 9 where the shallow grooves 10 is provided, to keep the amount of movement and deformation of the block when contacting with the ground relatively small .

If the groove depth d3 of the shallow groove 10 is excessively small, the stiffness of the region 9 may not be mitigated locally and the impact noise may not be reduced.

For this reason, it is preferred that the groove depth d3 of the shallow groove 10 is not less than 0.05 times the groove depth d1 of the circumferential grooves 3.

In the present embodiment, the shallow groove 10 is u-shaped in its top view as shown in Fig. 7.

The shallow groove 10 comprises a first groove segment 11 extending along the adjacent lateral groove 4, and a second groove segment 12 extending along the adjacent circumferential groove 3 from each end 11e of the first groove segment 11.

such first groove segment 11 suppresses a decrease in the stiffness of the hexagonal-shaped block 7 between the first groove segment 11 and the adjacent lateral groove 4, and maintains high wear resistance.

The second groove segment 12 suppresses a decrease in the stiffness of the hexagonal-shaped block 7 between the second groove segment 12 and the adjacent circumferential groove 3, and maintains high wear resistance.

As the first groove segment 11 is disposed closer to one of the adjacent lateral grooved 4 than the sipe 8, an excessive decrease in the stiffness of the region 9 between the first groove segment 11 and the sipe 8 is suppressed, and the uneven wear resistance is improved.

The second groove segments 12 extends from the first groove segment 11 toward the center in the tire circumferential direction of the hexagonal-shaped block 7.

This ensures that the second groove segments 12 have a relatively greater length Lc in the tire circumferential direction, and the impact noise reduction effect is enhanced.

In the present embodiment, the maximum groove width wb of the second groove segments 12 is greater than the maximum groove width wa of the first groove segment 11.

This effectively reduces the lateral stiffness of the region 9, while maintaining its high circumferential stiffness. Therefore, the noise performance is enhanced without deteriorating the wear resistance.

It is preferable that the maximum groove width wb of the second groove segments 12 is set in a range from 1.5 to 3.5 times the maximum groove width wa of the first groove segment 11. since the maximum groove width wb is more than 1.5 times the maximum groove width wa, the effect locally mitigating the stiffness of the region 9 is achieved.

since the maximum groove width wb is less than 3.5 times the maximum groove width wa, a large reduction in the block stiffness is suppressed.

In the present embodiment, the first groove segment 11 comprises a portion whose width wa is constant.

The first groove segment 11 in this example has a length Lb in the tire axial direction which is in a range from 50% to 90% of the axial width Wa (shown in Fig. 6) of the hexagonal-shaped block 7.

In the present embodiment, the groove width wb of each of the second groove segments 12 is continuously decreased from the first groove segment 11 toward the center in the tire circumferential direction of the hexagonal-shaped block 7.

The length Lc in the tire circumferential direction of each of the second groove segments 12 in this for example is in a range from 30% to 70% of the length (A) in the tire circumferential direction of the region 9 where the second groove segments are located.

In the hexagonal-shaped block 7 in the present embodiment, the shallow groove 10 is disposed in one of the two regions 9, and not disposed in the other of the two regions 9.

In the region 9 where the shallow groove 10 is provided, the ratio (B/A) of a distance B in the tire circumferential direction between the shallow groove 10 and the adjacent lateral groove 4, and the length (A) in the tire circumferential direction of the region 9, is preferably set in a range from 0.15 to 0.30.

since the ratio (B/A) is not less than 0.15, the stiffness of the hexagonal-shaped block 7 between the shallow groove 10 and the lateral groove 4 is maintained and the amount of movement and deformation of the block when contacting with the ground is kept low. since the ratio (B/A) is not more than 0.30, the impact noise when the block edges contact with the road surface is reduced.

The sipe 8 in this example is a so-called three-dimensional sipe extending in a zigzag manner in its longitudinal direction and depth direction.

In such sipe 8, as the opposed walls have convexoconcave and engage with each other, the apparent stiffness of the hexagonal-shaped block 7 is maintained, and the wear resistance of the block is maintained.

The sipe 8 is not limited to such a three-dimensional sipe. The sipe 8 may extend in a linear manner in its depth direction.

In this case, the sipe 8 may extend in a linear manner or zigzag manner in its longitudinal direction.

It is preferable that, as shown in Fig. 8B, the depth d4 of the sipe 8 is less than the groove depth d1 of the circumferential grooves 3.

The depth d4 of the sipe 8 is preferably in a range from 0.50 to 0.95 times the groove depth d1 of the circumferential grooves 3. since the depth d4 is not less than 0.50 times the groove depth d1, the stiffness of the hexagonal-shaped block 7 is locally mitigated and impact noise is reduced.

since the depth d4 is not more than 0.95 times the groove depth d1, the amount of movement and deformation of the block when contacting with the ground can be kept small.

It is preferable that the depth d4 of the sipe 8 is greater than the groove depth d2 of the lateral grooves 4. Thereby, the impact noise when the sipe 8 contacts with the road surface is reduced.

In the present embodiment, as shown in Fig. 6, the crown blocks 6A and the middle blocks 6C are each formed as the hexagonal-shaped block 7.

The outer diameter of the tire is larger at the crown blocks 6A and middle blocks 6C than at the shoulder blocks 6B, therefore, during straight running, a larger ground contact pressure is exerted on the crown blocks 6A and middle blocks 6C. By using the hexagonal-shaped block 7 as the crown blocks 6A and the middle blocks 6C, the wear resistance is further improved. However, it is also possible to use the hexagonal-shaped block 7 as only the crown blocks 6A or only the middle blocks 6C.

In the present embodiment, the shallow groove 10 is disposed in only the crown blocks 6A. As the crown blocks 6A are subjected to a higher ground pressure than the middle blocks 6C, by providing the shallow grooves 10 in the crown blocks 6A only, the impact noise when the block edges contact with the road surface can be greatly reduced.

In the present embodiment, the sipe 8 is disposed in the crown blocks 6A and the middle blocks 6C only. Thereby, the above described function is effectively derived, and the noise performance is improved without deteriorating the wear resistance.

The sipes 8 of the crown blocks 6A connect the crown-groove first protruding parts 16a and the crown-groove second protruding parts 16b with the middle-groove second protruding parts 20b. More specifically, the sipes 8 of the crown blocks 6A on one side of the crown circumferential groove 3A (left side in the figure) extend from the respective crown-groove second protruding parts 16b to the respective middle-groove second protruding parts 20b. And, the sipes 8 of the crown blocks 6A on the other side of the crown circumferential groove 3A (right side in the figure) extend form the crown-groove first protruding parts 16a to the middle-groove second protruding parts 20b. such sipes 8 maintain the balance of the stiffness between the two regions 9.

In the present embodiment, the sipes 8 of the middle blocks 6C extend from the respective middle-groove first protruding parts 20a to the respective shoulder-groove second protruding parts 18b.

In the present embodiment, each of the crown blocks 6A and the middle blocks 6C is provided with chamfers 24 extending from the ground contacting top surface of the block 6A/6C toward the lateral grooves 4 at a large inclination angle.

The chamfers 24 in this example are formed so as to include the extreme end points in the tire circumferential direction of the block 6A/6C. such chamfers 24 improve the wear resistance.

In this application, even if a block is provided with a chamfer or chamfers and thereby the contour shape of the ground contacting top surface is not hexagonal, when the contour shape of the block including the chamfer appears hexagonal in its top view of the block, such chamfered block is also referred to as a hexagonal-shaped block.

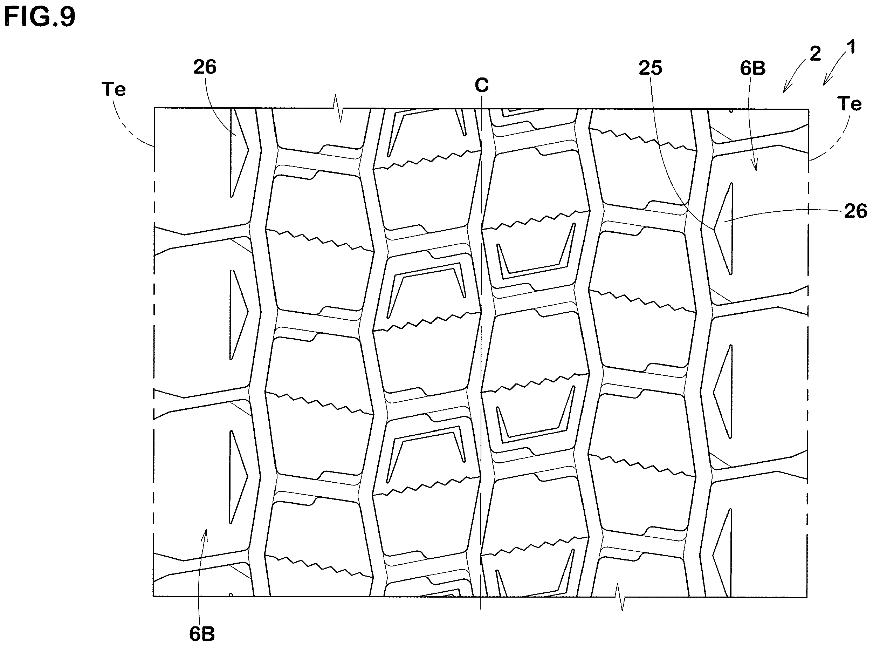

Fig. 9 is a developed partial view of the tread portion of a tire as another embodiment of the present invention. components of the present embodiment which are the same as the components of the above described embodiment, may be assigned with the same reference signs, and redundant descriptions thereof may be omitted.

In the present embodiment, the tread portion 2 is provided in each shoulder block 6B with a longitudinal groove 26.

The longitudinal groove 26 is triangular in its top view, and has an apex 25 located at the center in the tire circumferential direction. such longitudinal groove 26 also reduces the rigidity of the shoulder block 6B to a moderate degree and allows the shoulder block 6B to deform slightly when contacting with the ground.

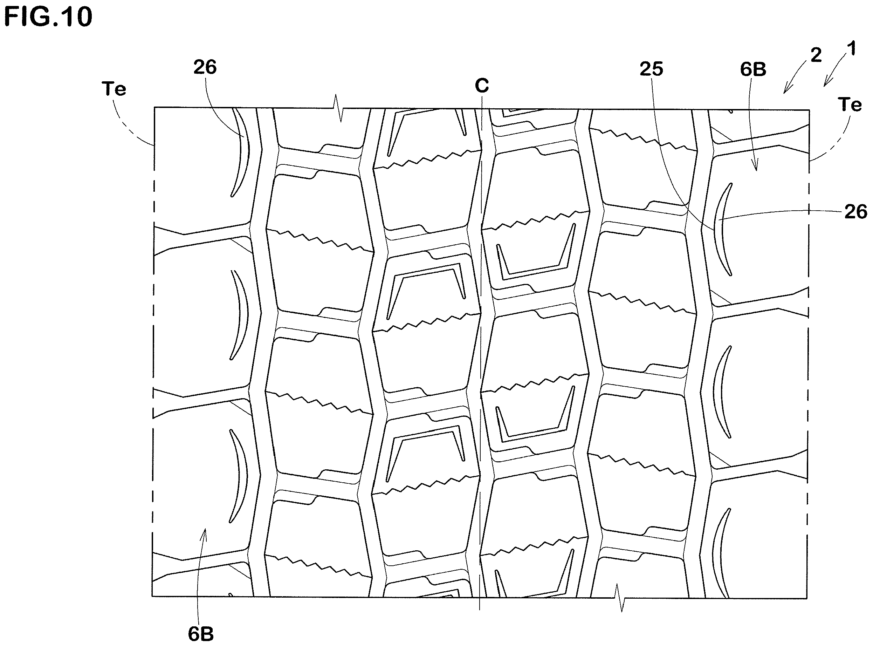

Fig. 10 is a developed partial view of the tread portion of a tire as yet another embodiment of the present invention. components of the present embodiment which are the same as the components of the above described embodiments, may be assigned with the same reference signs, and redundant descriptions thereof may be omitted.

In the present embodiment, the tread portion 2 is provided in each shoulder block 6B with a longitudinal groove 26.

The longitudinal groove 26 is crescent-shaped in its top view, and has an apex 25 located at the center in the tire circumferential direction. such longitudinal groove 26 also reduces the rigidity of the shoulder block 6B to a moderate degree and allows the shoulder block 6B to deform slightly when contacting with the ground.

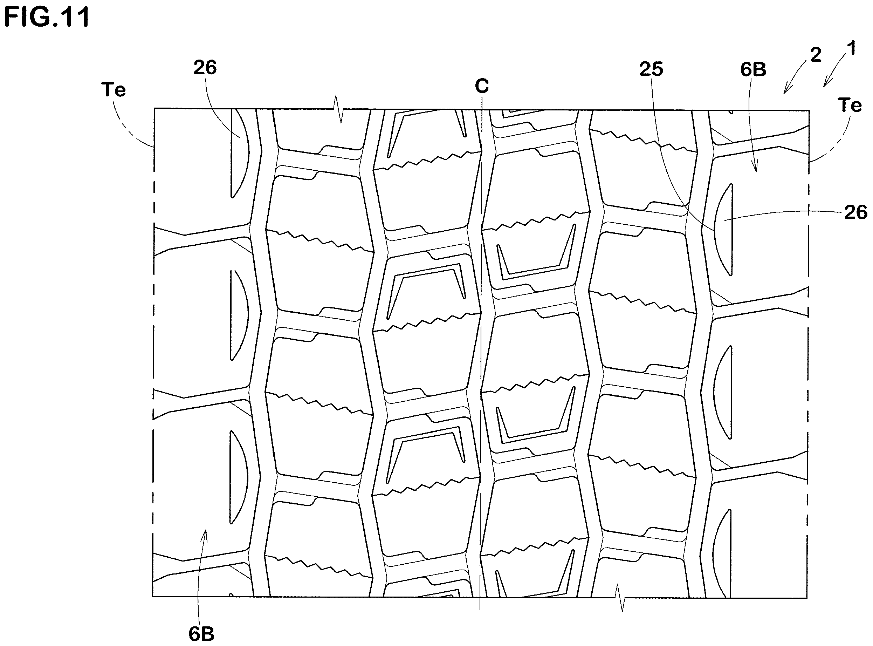

Fig. 11 is a developed partial view of the tread portion of a tire as yet another embodiment of the present invention. components of the present embodiment which are the same as the components of the above described embodiments, may be assigned with the same reference signs, and redundant descriptions thereof may be omitted.

In the present embodiment, the tread portion 2 is provided in each shoulder block 6B with a longitudinal groove 26.

The longitudinal groove 26 has an arcuate contour shape with an apex 25 at the center in the tire circumferential direction in its top view. such longitudinal groove 26 also reduces the rigidity of the shoulder block 6B to a moderate degree and allows the shoulder block 6B to deform slightly when contacting with the ground.

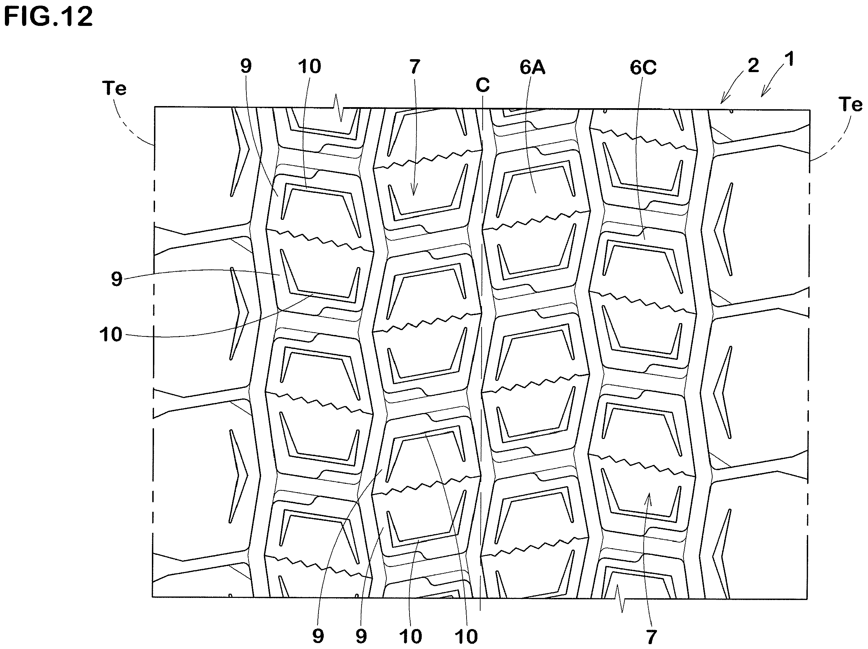

Fig. 12 is a developed partial view of the tread portion of a tire as yet another embodiment of the present invention. components of the present embodiment which are the same as the components of the above described embodiments, may be assigned with the same reference signs, and redundant descriptions thereof may be omitted.

In the present embodiment, the crown blocks 6A and the middle blocks 6c are formed as the hexagonal-shaped block 7.

Further, each of the crown blocks 6A and the middle blocks 6c is provided in each of the two regions 9 with the shallow groove 10. such tire 1 is further improved in the noise performance.

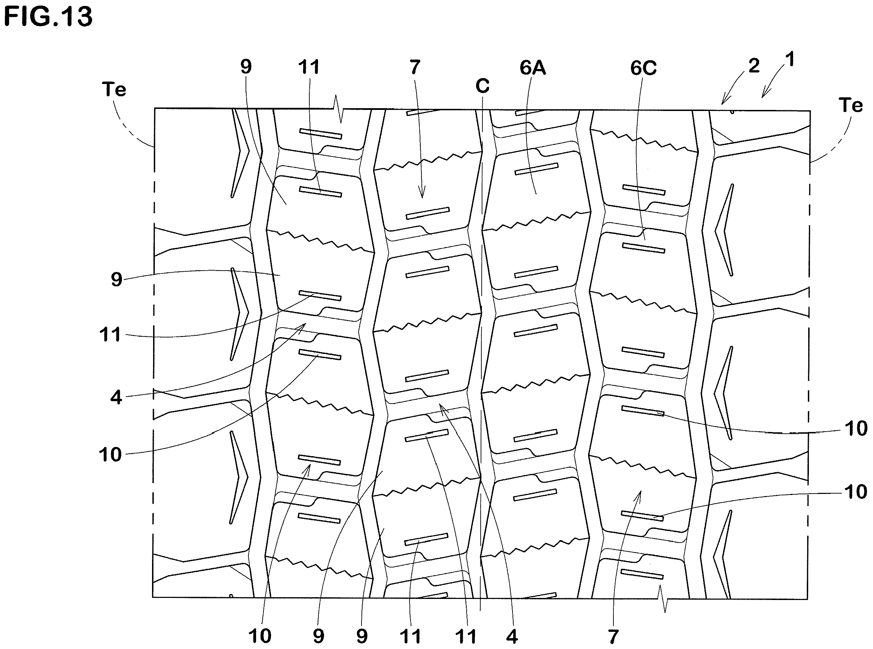

Fig. 13 is a developed partial view of the tread portion of a tire as yet another embodiment of the present invention. components of the present embodiment which are the same as the components of the above described embodiments, may be assigned with the same reference signs, and redundant descriptions thereof may be omitted.

In the present embodiment, the crown blocks 6A and the middle blocks 6c are formed as the hexagonal-shaped block 7.

In the present embodiment, each of the crown blocks 6A and the middle blocks 6C is provided in each of the two regions 9 with a shallow groove 10. such tire 1 is further improved in the noise performance.

In the present embodiment, the shallow groove 10 is made up of only the first groove segment 11 extending along the lateral groove 4. such shallow groove 10 prevents the circumferential rigidity of the hexagonal-shaped block 7 from decreasing and maintains high wear resistance.
while detailed description has been made of preferable embodiments of the present invention, the present invention can be embodied in various forms without being limited to the illustrated embodiments.

### working examples

Heavy-duty tires of size 315/70R22.5 were experimentally manufactured according to the specifications listed in Table 1. comparative example Ref.1 did not have longitudinal grooves in the shoulder blocks. Then, each tire was tested for wet performance and uneven wear resistance.

specifications common to all tires are as follows.
shoulder circumferential groove depth d1a: 18 mm
shoulder lateral groove depth d2a: 9 mm

The test methods are as follows.

### < wet performance test >

Test tires mounted on wheel rims of size 22.5 x 9.00 and inflated to 900 kPa were installed on all wheels of a test vehicle (4-ton truck). The test vehicle was run on a wet road surface of a test course with a load of 50% of its rated load capacity, and the braking distance at a speed of 100 km/h was measured.

The results are indicated in Table 1 by an index based on comparative example Ref.1 being 100, wherein the smaller the values, the better the wet performance.

### < Uneven wear resistance test (shoulder wear and block chipping-off ) >

The test vehicle was run on asphalt roads for 10000 km, and then the rear tires on the drive wheels were checked for whether chipping-off of the shoulder blocks was occurred or not, and whether uneven wear such as shoulder wear and railway wear was occurred in the vicinity of the shoulder circumferential grooves or not.
when uneven wear was occurred, the degree thereof was evaluated based on the amount of wear of comparative example Ref.1 being 100, wherein the larger the number, the better the uneven wear resistance.

The results are indicated in Table 1.

**Table 1**

| tire | Ref. 1 | Ref.2 | Ex.1 | Ex.2 | Ex.3 | Ex.4 | Ex.5 | Ex.6 | Ex.7 | Ex.8 | Ex.9 |
|---|---|---|---|---|---|---|---|---|---|---|---|
| tread portion (Fig. No.) | 1 | 1 | 1 | 1 | 1 | 1 | 1 | 1 | 9 | 10 | 11 |
| d5 (mm) | -- | 9 | 1.5 | 0.5 | 1.5 | 1.5 | 1.5 | 1.5 | 1.5 | 1.5 | 1.5 |
| θ2 (deg.) | 10 | 10 | 10 | 10 | 3 | 23 | 10 | 10 | 10 | 10 | 10 |
| longitudinal groove location *1 | -- | IN | IN | IN | IN | IN | OUT | IN | IN | IN | IN |
| Lf (mm) | -- | 5 | 5 | 5 | 5 | 5 | 30 | 5 | 5 | 5 | 5 |
| Sb/Sa (%) | -- | 5 | 5 | 5 | 5 | 5 | 5 | 12 | 5 | 5 | 5 |
| wet performance | 100 | 103 | 100 | 97 | 102 | 98 | 100 | 102 | 100 | 100 | 100 |
| shoulder wear | 100 | 90 | 115 | 110 | 108 | 110 | 110 | 110 | 115 | 115 | 115 |
| chipping-off | absence | presence | absence | absence | absence | absence | absence | absence | absence | absence | absence |

| | | | | | | | | | | | |
|---|---|---|---|---|---|---|---|---|---|---|---|
| *1) "IN" means that the longitudinal groove was located axially inside the center in the tire axial direction of the shoulder block,. "OUT" means that the longitudinal groove was located axially outside the center in the tire axial direction of the shoulder block. | | | | | | | | | | | |

As shown in Table 1, it was confirmed that the working example tires were improved in the uneven wear resistance without deteriorating the wet performance.

Heavy-duty pneumatic tires of size 315/70R22.5 were experimentally manufactured according to the specifications listed in Table 2. comparative Example Ref.3 did not have shallow grooves in any of the hexagonal-shaped blocks. Then, each tire was tested for noise performance and wear resistance. specifications common to all tires are as follows.
circumferential groove depth d1: 19 mm
lateral groove depth d2s: 16 mm

The test methods are as follows.

### < Noise performance test >

According to the test method specified in ECE R117-02, the pass-by noise level at a coasting speed of 70 km/h was measured for each test tire.

The results are indicated in Table 2 by an index based on comparative example ref3 being 100, wherein the lower the value, the better the noise performance.

### <Uneven wear resistance test (crown wear and heel-and-toe wear)>

Test tires mounted on wheel rims of size 22.5 x 9.00 and inflated to 900 kPa were installed on all wheels of a test vehicle (4-ton truck). The test vehicle was run for 10,000km on asphalt roads with a load of 50% of its rated load capacity, and then the rear tires on the drive wheels were checked for whether uneven wear such as heel-and-toe wear was occurred on the crown blocks or not, and the depth of the crown circumferential groove was measured to evaluate the crown wear resistance.

The results are shown in Table 2.

The crown wear resistance is indicates by an index based on comparative example Ref.3 being 100, wherein the higher the number, the better the wear resistance.

**Table 2**

| Tire | Ref.3 | Ref.4 | Ex.10 | Ex. 11 | Ex.12 | Ex.13 | Ex.14 | Ex.15 |
|---|---|---|---|---|---|---|---|---|
| tread portion (Fig. No.) | 1 | 1 | 1 | 1 | 1 | 1 | 12 | 13 |
| d3/d 1 | -- | 0.84 | 0.11 | 0.30 | 0.11 | 0.11 | 0.11 | 0.11 |
| d3/d2 | -- | 1.0 | 0.12 | 0.36 | 0.12 | 0.12 | 0.12 | 0.12 |
| d4/d 1 | 0.89 | 0.89 | 0.89 | 0.89 | 0.89 | 0.89 | 0.89 | 0.89 |
| B/A | -- | 0.25 | 0.25 | 0.25 | 0.10 | 0.40 | 0.25 | 0.25 |
| noise performance | 100 | 85 | 87 | 85 | 85 | 92 | 85 | 90 |
| crown wear resistance | 100 | 85 | 100 | 98 | 98 | 102 | 98 | 100 |
| heel-and-toe wear | absence | presence | absence | absence | absence | absence | absence | absence |

As shown in Table 2, it was confirmed that the working example tires were improved in the noise performance without a significant deterioration in the wear resistance.

**Description of the reference signs**
- 1: tire
- 3B: shoulder circumferential groove
- 4B: shoulder lateral groove
- 6B: shoulder block
- 10: shallow groove
- 22: convex portion
- 26: longitudinal groove
- 26e: end

## Claims

1. A tire (1) comprising:
a tread portion (2) provided with shoulder blocks (6B) defined by a tread edge (Te), a shoulder circumferential groove (3B) located adjacent to the tread edge (Te) and extending continuously in the tire circumferential direction in a zigzag manner, and shoulder lateral grooves (4B) extending from the shoulder circumferential groove (3B) to the tread edge (Te), the tread edge (Te) being an axial outermost edge of a ground contacting patch of the tire (1) which occurs under the normally loaded condition when the camber angle of the tire (1) is zero, wherein
each of the shoulder blocks (6B) comprises a convex portion (22) which projects toward the axially inside of the tire (1) and is formed by one of corners of zigzag of the shoulder circumferential groove (3B), and
each of the shoulder blocks (6B) is provided with a longitudinal groove (26) extending in the tire circumferential direction so that at least one of ends (26e) of the longitudinal groove (26) is located within the shoulder block,
**characterized in that** the longitudinal groove (26) has a groove depth less than groove depths of the shoulder circumferential groove (3B) and the shoulder lateral grooves (4B), the groove depth (d5) of the longitudinal groove (26) being in a range from 5 % to 20 % of the groove depth (d1a) of the shoulder circumferential groove (3B).

2. The tire (1) as claimed in claim 1, wherein
both of said ends (26e) of the longitudinal groove (26) are located within the shoulder block (6B).

3. The tire (1) as claimed in claim 1 or 2, wherein
each of the longitudinal grooves (26) is v-shaped.

4. The tire (1) as claimed in claim 1, 2 or 3, wherein the
the groove width of the above-said longitudinal groove (26) decreases continuously from its center in the tire circumferential direction to each of the ends (26e) thereof.

5. The tire (1) as claimed in any one of claims 1 to 4, wherein
an angle (θ4) of a straight line drawn between the two ends (26e) of the longitudinal groove (26) is not more than 10 degrees with respect to the tire circumferential direction.

6. The tire (1) as claimed in any one of claims 1 to 5, wherein
the longitudinal groove (26) is disposed axially inside the center in the tire axial direction of the shoulder block (6B).

7. The tire (1) as claimed in any one of claims 1 to 6, wherein
the minimum distance (Lf) from the axially inner edge (28) of the shoulder block (6B) to the longitudinal groove (26) is not less than 3 mm.

8. The tire (1) as claimed in any one of claims 1 to 7, wherein
the opening area of the longitudinal groove (26) at the ground contacting top surface of the shoulder block (26) is not more than 10% of the overall area of the ground contacting top surface of the shoulder block (26).

9. The tire (1) as claimed in any one of claims 1 to 8, wherein
the minimum distance (Lg) between the longitudinal groove (26) and the tread edge (Te) measured in the tire axial direction is not more than 75% of the axial width (W1) of the shoulder block (26).

10. The tire (1) as claimed in any one of claims 1 to 9, wherein
the length (Lh) in the tire circumferential direction of the longitudinal groove (26) is not less than 55% of the length (L1) in the tire circumferential direction of the shoulder block (26).

11. The tire (1) as claimed in any one of claims 1 to 10, wherein
the tread portion (2) is provided with a plurality of circumferential grooves (3, 3A, 3B, 3C) each extending continuously in the tire circumferential direction in a zigzag manner, inclusive of the above-said shoulder circumferential groove (3B), and a plurality of land regions (5A, 5C) are defined between the circumferential grooves (3),
each of the land regions (5A, 5C) is provided with lateral grooves (4A, 4C) and thereby circumferentially divided into hexagonal-shaped blocks (7) arranged in the tire circumferential direction,
each of the hexagonal-shaped blocks (7) has a width (wa) in the tire axial direction, and a length (La) in the tire circumferential direction greater than the width (wa) in the tire axial direction,
each of the hexagonal-shaped blocks (7) is provided with a sipe (8) traversing the block (7) in the tire axial direction and thereby circumferentially subdivided into two regions (9),
at least one of the subdivided two regions (9) of at least one of the hexagonal-shaped blocks (7) is provided with a shallow groove (10), and
the shallow groove (10) has a groove depth (d3) less than the groove depth (d1) of the circumferential groove (3) and less than the groove depth (d2) of the lateral grooves (4A, 4C).

12. The tire (1) as claimed in claim 11, wherein
the plurality of circumferential grooves (3, 3A, 3B, 3C) are five zigzag circumferential grooves,
the plurality of land regions (5A, 5C) are a pair of shoulder land regions (5B), a pair of middle land regions (5C) therebetween, and a pair of crown land regions (5A) therebetween, and
each of the hexagonal-shaped blocks (7) in the pair of crown land regions (5A) is provided, in one of the subdivided two regions (9), with the shallow groove (10).

13. The tire (1) as claimed in claim 11, wherein
the shallow groove (10) comprises a first groove segment (11) extending along the adjacent lateral groove (4A, 4C).

14. The tire (1) as claimed in claim 13, wherein
the shallow groove (10) comprises a second groove segment (12) extending from each of ends of the first groove segment (11) in a direction along the adjacent circumferential groove (3).

15. The tire (1) as claimed in of any one of claims 11 to 14, wherein
the shallow groove (10) has a groove depth (d3) of not more than 0.2 times the groove depth (d1) of the circumferential grooves (3).

## Patentansprüche

1. Reifen (1), umfassend:
einen Laufflächenabschnitt (2), der mit Schulterblöcken (6B) versehen ist, die durch eine Laufflächenkante (Te), eine Schulterumfangsrille (3B), die benachbart zu der Laufflächenkante (Te) ist und sich kontinuierlich zickzackförmig in der Reifenumfangsrichtung erstreckt, und Schulterquerrillen (4B), die sich von der Schulterumfangsrille (3B) zur Laufflächenkante (Te) erstrecken, definiert sind, wobei die Laufflächenkante (Te) eine axial äußerste Kante einer Bodenkontaktfläche des Reifens (1) ist, die im normal belasteten Zustand auftritt, wenn der Sturzwinkel des Reifens (1) Null beträgt, wobei
jeder der Schulterblöcke (6B) einen konvexen Abschnitt (22) umfasst, der in Richtung der axialen Innenseite des Reifens (1) vorsteht und durch eine der Ecken des Zickzacks der Schulterumfangsrille (3B) gebildet ist, und
jeder der Schulterblöcke (6B) mit einer Längsrille (26) versehen ist, die sich in der Reifenumfangsrichtung erstreckt, so dass mindestens eines der Enden (26e) der Längsrille (26) innerhalb des Schulterblocks angeordnet ist,
**dadurch gekennzeichnet, dass** die Längsrille (26) eine Rillentiefe aufweist, die geringer ist als Rillentiefen der Schulterumfangsrille (3B) und der Schulterquernuten (4B), wobei die Rillentiefe (d5) der Längsrille (26) in einem Bereich von 5 % bis 20 % der Rillentiefe (d1a) der Schulterumfangsrille (3B) liegt.

2. Reifen (1) nach Anspruch 1, wobei beide Enden (26e) der Längsrille (26) innerhalb des Schulterblocks (6B) angeordnet sind.

3. Reifen (1) nach Anspruch 1 oder 2, wobei jede der Längsrillen (26) V-förmig ist.

4. Reifen (1) nach Anspruch 1, 2 oder 3, wobei die Rillenbreite der oben erwähnten Längsrille (26) von ihrer Mitte in der Reifenumfangsrichtung zu jedem ihrer Enden (26e) kontinuierlich abnimmt.

5. Reifen (1) nach einem der Ansprüche 1 bis 4, wobei ein Winkel (θ4) einer zwischen den beiden Enden (26e) der Längsrille (26) gezogenen Geraden nicht mehr als 10 Grad in Bezug auf die Reifenumfangsrichtung beträgt.

6. Reifen (1) nach einem der Ansprüche 1 bis 5, wobei die Längsrille (26) axial in der Mitte des Schulterblocks (6B) in der Reifenaxialrichtung angeordnet ist.

7. Reifen (1) nach einem der Ansprüche 1 bis 6, wobei der Mindestabstand (Lf) von der axial inneren Kante (28) des Schulterblocks (6B) zu der Längsrille (26) nicht weniger als 3 mm beträgt.

8. Reifen (1) nach einem der Ansprüche 1 bis 7, wobei die Öffnungsfläche der Längsrille (26) an der den Boden berührenden oberen Oberfläche des Schulterblocks (26) nicht mehr als 10% der Gesamtfläche der den Boden berührenden oberen Oberfläche des Schulterblocks (26) beträgt.

9. Reifen (1) nach einem der Ansprüche 1 bis 8, wobei der Mindestabstand (Lg) zwischen der Längsrille (26) und der Laufflächenkante (Te), gemessen in der Reifenaxialrichtung, nicht mehr als 75% der axialen Breite (W1) des Schulterblocks (26) beträgt.

10. Reifen (1) nach einem der Ansprüche 1 bis 9, wobei die Länge (Lh) der Längsrille (26) in der Reifenumfangsrichtung nicht weniger als 55% der Länge (L1) des Schulterblocks (26) in Reifenumfangsrichtung beträgt.

11. Reifen (1) nach einem der Ansprüche 1 bis 10, wobei
der Laufflächenabschnitt (2) mit einer Vielzahl von Umfangsrillen (3, 3A, 3B, 3C) versehen ist, die sich jeweils kontinuierlich in der Reifenumfangsrichtung zickzackförmig erstrecken, einschließlich der oben genannten Schulterumfangsrille (3B), und eine Vielzahl von Landbereichen (5A, 5C) zwischen den Umfangsrillen (3) definiert sind,
jeder der Landbereiche (5A, 5C) mit Querrillen (4A, 4C) versehen ist und dadurch in Umfangsrichtung in sechseckige Blöcke (7) unterteilt ist, die in der Reifenumfangsrichtung angeordnet sind,
jeder der sechseckigen Blöcke (7) eine Breite (Wa) in der Reifenaxialrichtung und eine Länge (La) in der Reifenumfangsrichtung aufweist, die größer ist als die Breite (Wa) in der Reifenaxialrichtung,
jeder der sechseckigen Blöcke (7) mit einem Feinschnitt (8) versehen ist, der den Block (7) in der Reifenaxialrichtung durchquert, und dadurch in Umfangsrichtung in zwei Bereiche (9) unterteilt ist,
mindestens einer der beiden unterteilten Bereiche (9) von mindestens einem der sechseckigen Blöcke (7) mit einer flachen Rille (10) versehen ist, und
die flache Rille (10) eine Rillentiefe (d3) aufweist, die geringer ist als die Rillentiefe (d1) der Umfangsrille (3) und geringer ist als die Rillentiefe (d2) der Querrillen (4A, 4C).

12. Reifen (1) nach Anspruch 11, wobei
die Vielzahl von Umfangsrillen (3, 3A, 3B, 3C) fünf Zickzack-Umfangsrillen sind,
die Vielzahl von Landbereichen (5A, 5C) ein Paar Schulterlandbereiche (5B), ein Paar mittlere Landbereiche (5C) dazwischen und ein Paar Kronenlandbereiche (5A) dazwischen sind, und
jeder der sechseckigen Blöcke (7) in dem Paar Kronenlandbereiche (5A) in einem der unterteilten zwei Bereiche (9) mit der flachen Rille (10) versehen ist.

13. Reifen (1) nach Anspruch 11, wobei die flache Rille (10) ein erstes Rillensegment (11) umfasst, das sich entlang der benachbarten Querrille (4A, 4C) erstreckt.

14. Reifen (1) nach Anspruch 13, wobei die flache Rille (10) ein zweites Rillensegment (12) umfasst, das sich von jedem der Enden des ersten Rillensegments (11) in einer Richtung entlang der benachbarten Umfangsrille (3) erstreckt.

15. Reifen (1) nach einem der Ansprüche 11 bis 14, wobei die flache Rille (10) eine Rillentiefe (d3) von nicht mehr als dem 0,2-fachen der Rillentiefe (d1) der Umfangsrillen (3) aufweist.

## Revendications

1. Pneumatique (1) comprenant :
une portion formant bande de roulement (2) dotée de blocs d'épaulement (6B) définis par un bord de bande de roulement (Te), d'une rainure circonférentielle d'épaulement (3B) située de manière adjacente au bord de bande de roulement (Te) et s'étendant en continu dans la direction circonférentielle du pneumatique d'une manière en zigzag, et de rainures latérales d'épaulement (4B) s'étendant depuis la rainure circonférentielle d'épaulement (3B) jusqu'au bord de bande de roulement (Te), le bord de bande de roulement (Te) étant un bord axialement le plus extérieur d'un patch de contact au sol du pneumatique (1) qui se produit sous la condition normalement chargée quand l'angle de cambrure du pneumatique (1) est zéro, dans lequel
chacun des blocs d'épaulement (6B) comprend une portion convexe (22) qui se projette vers l'intérieur, axialement, du pneumatique (1) et qui est formée par l'un des coins de zigzag de la rainure circonférentielle d'épaulement (3B), et
chacun des blocs d'épaulement (6B) est doté d'une rainure longitudinale (26) s'étendant dans la direction circonférentielle du pneumatique de telle sorte que l'une au moins des extrémités (26e) de la rainure longitudinale (26) est située à l'intérieur du bloc d'épaulement,
**caractérisé en ce que** la rainure longitudinale (26) a une profondeur de rainure inférieure à des profondeurs de rainure de la rainure circonférentielle d'épaulement (3B) et des rainures latérales d'épaulement (4B), la profondeur de rainure (d5) de la rainure longitudinale (26) étant dans une plage allant de 5 % à 20 % de la profondeur de rainure (d1a) de la rainure circonférentielle d'épaulement (3B).

2. Pneumatique (1) selon la revendication 1, dans lequel les deux desdites extrémités (26e) de la rainure longitudinale (26) sont situées à l'intérieur du bloc d'épaulement (6B).

3. Pneumatique (1) selon la revendication 1 ou 2, dans lequel chacune des rainures longitudinales (26) est en forme de V.

4. Pneumatique (1) selon la revendication 1, 2 ou 3, dans lequel la largeur de rainure de la rainure longitudinale (26) précitée diminue en continu depuis son centre dans la direction circonférentielle du pneumatique jusqu'à chacune des extrémités (26e) de celle-ci.

5. Pneumatique (1) selon l'une quelconque des revendications 1 à 4, dans laquelle
un angle (θ4) d'une ligne droite tirée entre les deux extrémités (26e) de la rainure longitudinale (26) n'est pas supérieur à 10 degrés par rapport à la direction circonférentielle du pneumatique.

6. Pneumatique (1) selon l'une quelconque des revendications 1 à 5, dans lequel
la rainure longitudinale (26) est disposée axialement à l'intérieur du centre dans la direction axiale du pneumatique du bloc d'épaulement (6B).

7. Pneumatique (1) selon l'une quelconque des revendications 1 à 6, dans lequel
la distance minimum (Lf) depuis le bord axialement intérieur (28) du bloc d'épaulement (6B) jusqu'à la rainure longitudinale (26) n'est pas inférieure à 3 mm.

8. Pneumatique (1) selon l'une quelconque des revendications 1 à 7, dans lequel
l'aire d'ouverture de la rainure longitudinale (26) au niveau de la surface supérieure de contact au sol du bloc d'épaulement (26) n'est pas supérieure à 10 % de l'aire entière de la surface supérieure de contact au sol du bloc d'épaulement (26).

9. Pneumatique (1) selon l'une quelconque des revendications 1 à 8, dans lequel
la distance minimum (Lg) entre la rainure longitudinale (26) et le bord de bande de roulement (Te) mesurée dans la direction axiale du pneumatique n'est pas supérieure à 75 % de la largeur axiale (W1) du bloc d'épaulement (26).

10. Pneumatique (1) selon l'une quelconque des revendications 1 à 9, dans lequel
la longueur (Lh) dans la direction circonférentielle du pneumatique de la rainure longitudinale (26) n'est pas inférieure à 55 % de la longueur (L1) dans la direction circonférentielle du pneumatique du bloc d'épaulement (26).

11. Pneumatique (1) selon l'une quelconque des revendications 1 à 10, dans lequel
la portion formant bande de roulement (2) est dotée d'une pluralité de rainures circonférentielles (3, 3A, 3B, 3C) s'étendant chacune en continu dans la direction circonférentielle du pneumatique d'une manière en zigzag, y compris la rainure circonférentielle d'épaulement (3B) précitée, et d'une pluralité de régions en relief (5A, 5C) sont définies entre les rainures circonférentielles (3),
chacune des régions en relief (5A, 5C) est dotée de rainures latérales (4A, 4C) et est ainsi divisée circonférentiellement en des blocs de forme hexagonale (7) agencés dans la direction circonférentielle du pneumatique,
chacun des blocs de forme hexagonale (7) a une largeur (Wa) dans la direction axiale du pneumatique, et une longueur (La) dans la direction circonférentielle du pneumatique supérieure à la largeur (Wa) dans la direction axiale du pneumatique,
chacun des blocs de forme hexagonale (7) est doté d'une fente (8) traversant le bloc (7) dans la direction axiale du pneumatique et est ainsi subdivisé en deux régions (9),
l'une au moins des deux régions (9) de l'un au moins des blocs de forme hexagonale (7) est dotée d'une rainure peu profonde (10), et
la rainure peu profonde (10) a une profondeur de rainure (d3) inférieure à la profondeur de rainure (d1) de la rainure circonférentielle (3) et inférieure à la profondeur de rainure (d2) des rainures latérales (4A, 4C).

12. Pneumatique (1) selon la revendication 11, dans lequel
la pluralité de rainures circonférentielles (3, 3A, 3B, 3C) sont cinq rainures circonférentielles en zigzag,
la pluralité de régions en relief (5A, 5C) sont une paire de régions en relief d'épaulement (5B), une paire de régions en relief médianes (5C) entre celles-ci, et une paire de régions en relief de couronne (5A) entre celles-ci, et
chacun des blocs de forme hexagonale (7) dans la paire de régions en relief de couronne (5A) est doté, dans l'une des deux régions (9) subdivisées, de la rainure peu profonde (10).

13. Pneumatique (1) selon la revendication 11, dans lequel
la rainure peu profonde (10) comprend un premier segment de rainure (11) s'étendant le long de la rainure latérale (4A, 4C) adjacente.

14. Pneumatique (1) selon la revendication 13, dans lequel
la rainure peu profonde (10) comprend un second segment de rainure (12) s'étendant depuis chacune des extrémités du premier segment de rainure (11) dans une direction le long de la rainure circonférentielle (3) adjacente.

15. Pneumatique (1) selon l'une quelconque des revendications 11 à 14, dans lequel
la rainure peu profonde (10) a une profondeur de rainure (d3) qui n'est pas plus de 0,2 fois la profondeur de rainure (d1) des rainures circonférentielles (3).
